# EUROPEAN PATENT APPLICATION

(11) **EP 4 293 850 A1**
(43) Date of publication of application: **20.12.2023**
(21) Application number: 22179030.6
(22) Date of filing: 14.06.2022
(51) Int. Cl.: H02J 3/00, H02J 3/14, H02J 7/34, H02J 3/32, H02J 7/35

(54) **METHOD AND SYSTEM OF WIRELESS MANAGEMENT OF THE OPERATION OF A POWER SUPPLY SYSTEM OF ELECTRIC LOADS**

(71) Applicant: Seedia Sp. z o.o., 31-231 Kraków (PL)
(72) Inventor: HO UBOWICZ, Piotr, 43-300 Bielsko-Bia a (PL); KRZYSZKOWSKI, Tomasz, 31-207 Kraków (PL)
(74) Representative: Marcinska-Porzuc, Aleksandra

(57) **Abstract**

The invention relates to a method for wirelessly managing the operation of a power supply system for electrical loads characterized in that individual loads (6, 7) are prioritized, and the functionalities provided by each load are prioritized. At least one load voltage threshold is determined for each load (6, 7), whereby exceeding a load voltage threshold changes the functionalities provided by that load. At least one buffer energy threshold is also determined, specifying the amount of electricity stored in buffers (4) of electricity. In addition, the average current energy consumption over time at all loads (6, 7) is calculated, and based on the calculated average energy consumption and on the predicted weather and/or environmental conditions, the buffer (4) energy discharge function over time is determined, and the probability of energy loss in the buffers (4) below the established buffer energy threshold is calculated, the charging current of the buffers (4) of electricity is controlled predictively, and the operation of the power system is controlled, which, based on the established voltage thresholds of all loads (6, 7) and the established energy threshold of the buffer (4) of electricity, according to the priorities assigned to the loads, either turns on or off the loads and/or the functionality provided by these loads, and this operation is adjusted on an ongoing basis based on measurement data so as to maximize the operation time of the loads (6, 7) with the highest assigned priorities and or the functionality of these loads with the highest hierarchy. The object of the invention is also a system for wireless management of the operation of a power supply system for electrical loads, in which this method is implemented.

## Description

### Field of the invention

The subject of the invention is a method and system for wirelessly managing the operation of a power supply system for electric loads, powered by electricity buffers from renewable energy sources, which generate electricity under changing weather and environmental conditions. The invention has applications including, but not limited to, small electromobility charging devices, electric vehicle charging stations, urban and suburban transportation stops, smart shelters, information kiosks, solar benches, garden furniture, advertising devices.

### Background of the invention

More and more equipment is now being powered by renewable energy sources in line with the worldwide trend to reduce the harmful carbon footprint of conventional power sources. Moving away from energy sources using fossil fuels, increasing attention is being focused on energy found in the environment. However, this energy is characterized by the variable conditions under which it occurs. Solar energy occurs only during the day. In addition, cloud cover, precipitation, dust and other factors limit the amount of energy that reaches the earth's surface, where it can be converted into electricity and used to power electrical loads. In addition, the position of the sun changes so solar tracking systems are needed to maximize the incident radiation to the surface where it is absorbed and converted into electricity. Similar limitations exist for wind and hydroelectric power, where wind thrust is highly variable and water flow and/or water wave tides vary within fairly wide limits. Therefore, the overwhelming number of current solutions using renewable energy sources store energy in buffers and feed electricity consumers from these buffers. However, it turns out that energy storage alone will not ensure stable operation of power supply systems, especially in the absence of, or a significant reduction in the ability to draw energy from renewable sources. This applies to power supply devices related to road infrastructure, where traffic signals, illumination of road signs, curves, bridges and the like are used, as well as electric vehicle charging stations, small electromobility devices and a wide range of other loads, for example, smart city shelters, information kiosks, solar benches, garden furniture, advertising devices, information points located in isolated places, on hiking trails, in landscape parks and many others. However, solutions are still needed to ensure that the performance of power systems is optimized so that at least the most critical devices can operate for as long as possible.

### State of the art

From Japanese patent application JP2019097267A is known a system for managing the power supply system of a microgrid of electric loads that uses renewable energy sources. Energy from renewable sources is converted in photovoltaic panels and/or hydrogenerators to the form of electricity and stored in batteries. Power system management boils down to executing a plan to optimize battery charging/discharging based on the prediction of energy demand from consumers and based on the amount of stored energy in the batteries, taking into account the minimization of microgrid operating costs. The main goal is to optimize energy costs in grid-operated installations.

On the other hand, from European patent application EP3007302A1, a battery energy storage system is known, used in the extraction of energy from photovoltaic panels, solar panels and wind generators, in which battery charging is managed according to a Ramp-Rate Limit strategy limiting the frequency of cycle changes and the amount of battery charging/discharging current. This management involves predetermining the range of power changes needed by electrical loads and the target charging/discharging parameters, taking into account forecasting of the amount of power supplied from renewable energy sources. The forecasting uses meteorological data on changes in irradiance and a cloud tracking system to implement predictive control based on the model built, based on a non-linear model and based on dynamic programming to optimize the sequence of decisions affecting the sequence of states determined in the management system. A similar mechanism for predicting the performance of a renewable energy source is disclosed in US 7002260B2, where a module using wind system modeling algorithms based on wind speed monitoring and past wind profile data is also described. The module was placed between a renewable energy source and an energy load, in the form of a power grid, with batteries connected in parallel.

In addition, a wireless power system management and control system is known from UK patent application GB2508755, which supplies electricity to loads meeting target short-term and long-term requirements, where loads are categorized and access to power by loads is limited. The categorization of loads depends on user preferences and priority for power access when there is not enough electricity to supply all loads. Likewise, access to power supply is predicted taking into account short-term forecasting a minimum of 0.5 hours in advance and long-term forecasting a maximum of 72 hours in advance, subject to a longer period of up to 10 days or 2 weeks. A weather station is used to determine conditions and predict weather parameters, receiving information on macro-scale weather conditions at the supra-regional level, as well as micro-scale information at the local level.

### Summary of the invention

A method of wireless management of the operation of the power system of electric loads, supplied from renewable electricity buffers, is characterized by the fact that individual loads are prioritized, and the functionalities provided by each load are prioritized. At least one load voltage threshold is established for each load, where exceeding the voltage threshold of a load changes the functionalities provided by that load. At least one buffer energy threshold is also determined, specifying the amount of electricity stored in electricity buffers. In addition, the average current energy consumption over time at all consumers is calculated and, based on the calculated average energy consumption and on the predicted weather and/or environmental conditions and the calculated probability of energy loss in the buffers below the established buffer energy threshold, controls predictively the charging current of the electricity buffers and the operation of the power supply system, which, based on the established voltage thresholds of all loads and the established energy threshold of the electricity buffer, according to the priorities assigned to the loads, either turns on, changes to an "on-demand" mode of operation, or turns off the loads and/or functionality provided by these loads. This action is adjusted on an ongoing basis based on metering data so as to maximize the operation time of the loads with the highest assigned priorities and either the functionality of those loads with the highest hierarchy. Advantageously, two voltage thresholds, upper and lower, are established for each load. In the zone of operation above the upper voltage threshold, the load operates with all functionalities in continuous mode. In the zone of operation below the lower voltage threshold, the load is turned off. In the zone between the lower and upper voltage threshold, load operation is provided on demand and/or some functionality is disabled or limited. Load operation on demand occurs when the user presses a button that activates load switching. For loads in the form of USB or inductive chargers, among others, on-demand operation means that the output current of these chargers is limited. The limited value of said output current results from the current energy capabilities of the buffer and/or operating in a zone above or below the buffer's established energy threshold. The prioritization of loads and the prioritization of functionality within each load is determined by, among other things, an analysis of the frequency of functionality used by users of each load, the type of device in which this management of the operation of the electric load power system is implemented, and the weather and environmental conditions occurring at the location of said device. Advantageously, the priorities given to the consumers and/or the prioritization of the functionalities provided by these consumers are determined prior to the start of the operation of the electric loads during the configuration of their operation. The aforementioned predetermined priorities and prioritization can be remotely modified during the operation of the device.

In the case of buffer energy thresholds, the charge level of the electricity buffer is determined in watt-hours based on measurements. The average current power consumption, which is the power consumed by the entire device, is also determined in watts. The ratio of the charge level of the electricity buffer to the average current power consumption determines the operating time of the device in hours. An unmetered weather factor is introduced, depending on the level of cloud cover or wind strength or sea agitation and/or forecast weather conditions. In the case of obtaining electricity from photovoltaic panels, the weather factor can take the following values as examples: 0 for no sun, 0 - 0.2 for high cloudiness, 0.2 - 0.4 for medium cloudiness, 0.4 - 0.6 for low cloudiness and 0.6 - 1.0 for sunny weather. The nominal output of the renewable energy source is multiplied by the weather factor thus determined. In addition, due to the fact that the day has different lengths depending on the season and also depending on the latitude at which the device operates, a coefficient, specified in hours, is introduced to determine the number of hours of sunshine on a specific day. The product of the nominal power of the renewable energy source and the weather factor is multiplied by the factor determining the number of hours of sunshine for a given day, obtaining in watt-hours the amount of energy produced during the specified day. The amount of energy produced in watt-hours for one day, thus determined, is then multiplied by the number of days. The charge level of the energy buffer in watt-hours is added and the resulting sum is divided by the average current power consumption in watts. This determines the energy buffer's discharge function over time, taking into account forecast weather conditions. As the energy buffer passes through the successive energy thresholds (100%, 80%, 60%, 40%, 10%) specified for the discharge function, there is a change in the operation of the power system's operation management to extend the operating time of the most significant loads of the entire device.

The system for wireless management of the operation of the power system for electric loads supplied from renewable electricity buffers is characterized by the fact that individual loads are prioritized and at least one load voltage threshold is specified for each load, with the functionality provided by the load changing if the load voltage threshold is exceeded. In addition, there is at least one buffer energy threshold that determines the amount of electricity stored in electricity buffers. The average current energy consumption over time is calculated for all loads. Based on the calculated average energy consumption and on the forecasted weather and/or environmental conditions, the discharge function of the electricity buffer is determined, and the probability of energy loss in the buffers below the established buffer energy threshold is calculated, the said system provides predictive control of the charging current of the electricity buffers and predictive operation of the power system, whereby, based on the established voltage thresholds of all loads and the established energy threshold of the electric energy buffer, according to the priorities assigned to the loads, the system either turns on or off the loads and/or the functionalities provided by these loads, and continuously adjusts this action based on measurement data so as to maximize the operation time of the loads with the highest assigned priorities. Electricity buffers are batteries and/or supercapacitors. The determination of at least one mentioned threshold, which determines the amount of electricity stored in the buffers, is based on the determination of the discharge function of the battery and/or supercapacitor or other energy storage over time. Below the designated threshold, the operation of specific electric loads is turned off according to the previously assigned priorities and/or the individual functionality provided by these loads is turned off according to the established hierarchy of importance. The loads include, among others, a multimedia module, an audio module, a backlit keyboard, an LED lighting module, a wireless network router - advantageously WiFi and/or ZigBee, a smog sensor, a temperature sensor, a dusk sensor, a motion sensor, a GSM and/or GPRS antenna, an electromobility charger module. Advantageously, each load has at least two voltage thresholds, upper and lower. In the zone of operation above the upper voltage threshold, the system according to the invention provides operation of the load with all functionalities in continuous mode. In the zone of operation below the lower voltage threshold, the system shuts down the load. In the zone between the lower voltage threshold and the upper voltage threshold, the system provides load operation on demand and/or disables or limits functionality according to a predetermined hierarchy of importance. Advantageously, the system provides on-demand load operation when the user presses a button that activates load switching. For loads in the form of, inter alia, USB or inductive chargers operating in on-demand mode, the system limits the output current of said chargers, where the limited value of said output current is due to the current energy capabilities of the buffer and/or operating in a zone either above or below a predetermined energy threshold of the buffer. The system according to the invention prioritizes the loads and/or prioritizes the functionality provided by said loads prior to the start of operation of the electric loads during the configuration of their operation, and can remotely modify said prioritization during the operation of the device. The renewable energy source is, in particular, solar radiation, wind pressure, water flow and/or tide, wherein the weather and/or environmental data are respectively cloud cover, precipitation, insolation in the case of solar radiation, wind measurement data and barometric data in the case of wind pressure, water quantity, water level and water level in the case of water flow and/or tide.

### Beneficial effects of the invention

The method of managing the operation of the power system according to the invention makes it possible to increase the operation time of equipment that is most essential at the expense of the operation of equipment whose operation is secondary. The power system operation management system according to the invention allows weather forecasts to be taken into account in the operation of devices powered by renewable energy sources. In this way, the normal operation of priority loads can be ensured in advance, keeping the state of charge of energy buffers at such a level as to ensure maximum operating times of predetermined electric loads.

### Description of the Drawings

The method and system of wireless management of the operation of the electric load power system is shown in an example implementation illustrated in the figures of the figure, where fig. 1 shows a simplified modular working arrangement in which the power system operation management system according to the invention is realized, fig. 2 shows a simplified block diagram of the power system operation management method according to the invention, fig. 3 illustrates a block diagram of an example device in which the method of managing the operation of the power system according to the invention is used, fig. 4 illustrates a schematic diagram of a modular working arrangement of a power system operation management system according to the invention, fig. 5 illustrates schematically an example of implementation of the method of managing the operation of the power system according to the invention in a smart shelter.

### Detailed Description

The invention is described in examples of implementation. The management of the operation of the electric load power system is embodied in the method of powering smart city devices, operating using photovoltaic panels. These devices are benches, garbage cans, bus shelters, information kiosks and other public objects of this type. Management involves transmitting the device's operating settings, remotely performing updates and sending telemetry data on the device's operation to a server. The loads independently establish communication with the server every preset period of time, advantageously every 15 minutes. Thus, the entire device is adjusted to work autonomously on the basis of the last available configuration, making it autonomous both in terms of control and power supply.

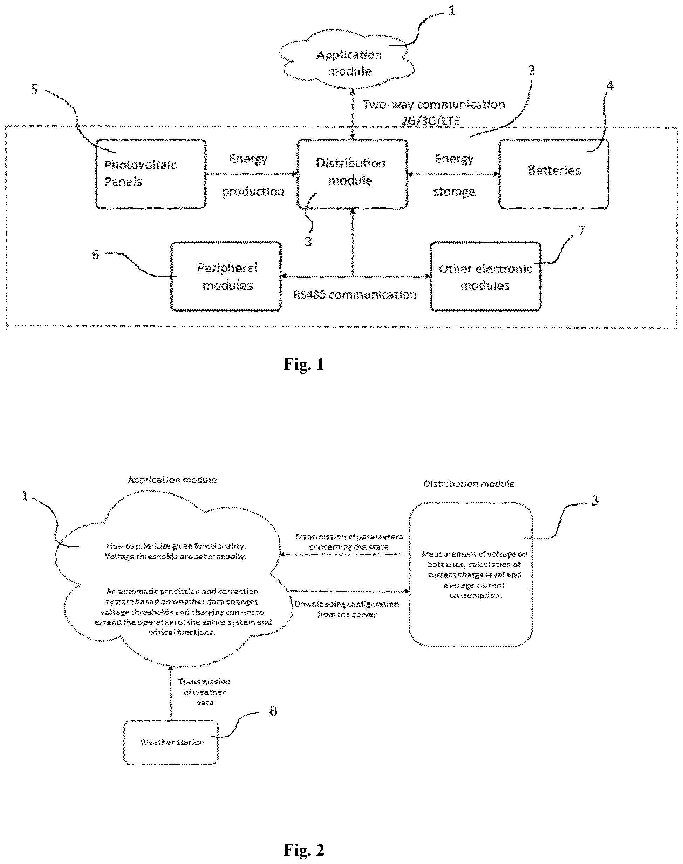

Fig. 1 shows the modules of the power system operation management system according to the invention. The application module 1 remains in wireless communication with the distribution module 3 located in the utility device 2, for example, in a communication shed used for waiting for a vehicle of public transport. Distribution module 3 is the master, or master system, with respect to the other modules of the system. Utility 2 is powered by a battery bank 4, which is recharged by electricity generated by photovoltaic panels 5, exposed to the sun. The panels 5 thus provide electricity to the entire system, in which the charging of the batteries 4 is controlled by the distribution module 3. In addition, the distribution module 3 remains in wired communication with peripheral modules 6 acting as slaves and other electronic modules 7, also acting as slaves. Communication between the master and slave modules is carried out using the well-known serial transmission standards RS485, I2C, and SPI, depending on the electronics used.

In Fig. 2 illustrates a simplified block diagram of how to manage the operation of the power system. The application module is connected wirelessly to a weather station 8. The station 8 acquires weather data and sends it to the application module 1. In addition, parameters determining the status of the utility device 2 are sent from the distribution module 3 to the application module. The main parameter determining the status of the device 2 is the voltage of the battery bank 4. In addition to this, the distribution module 3 calculates the current charge level of the battery bank 4 and the average current power consumption of the device 2. These parameters are also sent to the application module 1, which, on the basis of these parameters and on the basis of weather data provided from the weather station 8, predictively determines the energy thresholds of the battery bank 4 and determines the charging current of the battery bank 4, charged from the photovoltaic cells 5. The energy thresholds and the charging current of the battery bank 4 are calculated so as to maximize the operating time of the most significant electric loads in the device 2 and the most significant functions provided by these loads. Based on the data received from the weather station 8 and the average energy consumption of all loads 6, 7, the loss of the amount of energy in the buffers below the established energy threshold of the buffer 4 is determined. This loss, or discharge, is determined as follows.

Based on the measurements, the level of charge of the electricity buffer, PNA, is determined in watt-hours. Also determined in watts is the average current power consumption, BZ, which is the power consumed by the entire device 2. The ratio of the charge level of the electricity buffer to the average current power consumption determines the operating time of the device in hours, TP = PNA/BZ. An unmetered weather factor is introduced, k, which depends on the level of cloud cover or wind strength or sea agitation and/or forecast weather conditions. In the case of obtaining electricity from photovoltaic panels, the weather factor can take the following values as examples: 0 for no sun, 0 - 0.2 for high cloudiness, 0.2 - 0.4 for medium cloudiness, 0.4 - 0.6 for low cloudiness and 0.6 - 1.0 for sunny weather. The nominal PN output of the renewable energy source is multiplied by the weather factor k thus determined. In addition, due to the fact that the day has different lengths depending on the season and also depending on the latitude at which the device operates, the HSL factor, specified in hours, is introduced, which determines the number of hours of sunshine on a specific day. The product of the nominal power of the renewable energy source and the weather factor is multiplied by the factor determining the number of hours of sunshine for a given day, obtaining in watt-hours the amount of energy produced during the specified day, ED = PN^{∗}k^{∗}HSL. The amount of energy produced in watt-hours for one day thus determined is then multiplied by the number of days, ED^{∗}N. The charge level of the energy buffer in watt-hours is added and the resulting sum is divided by the average current power consumption in watts, ED^{∗}N+PNA=PR. This determines the energy buffer's discharge function over time, PR(t), taking into account forecast weather conditions.

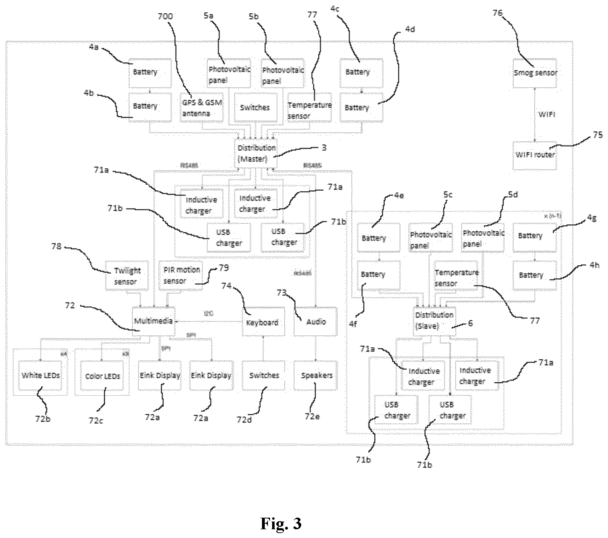

In Fig. 3 illustrates a block diagram of an example of utility device 2 powered by photovoltaic panels 5a, 5b 5c, 5d. The device 2 is a smart shelter for a public transportation stop. Solar energy is converted into electricity and is stored in batteries 4a, 4b, 4c, 4d, 4e, 4f, 4g and 4h. Distribution module 3 of device 2 remains in wired communication using the RS485 serial transmission standard with loads in the form of inductive chargers 71a, USB chargers 71b, with multimedia module 72, with speakers 73, keyboard 74, smog sensor 76, temperature sensor 77, dusk sensor 78, motion sensor 79. Distribution module 3 is also connected to multiple first buttons and remains in wireless communication with WiFi/GPRS router 75 and GSM/GPS antenna assembly 700. Multimedia module 72 remains in wired communication with lighting module in the form of white LED assembly 72 and color LED assembly 72c, with Eink display module 72a, with second buttons assembly 72d and speakers 72e using SPI and I2C serial transmission standards.

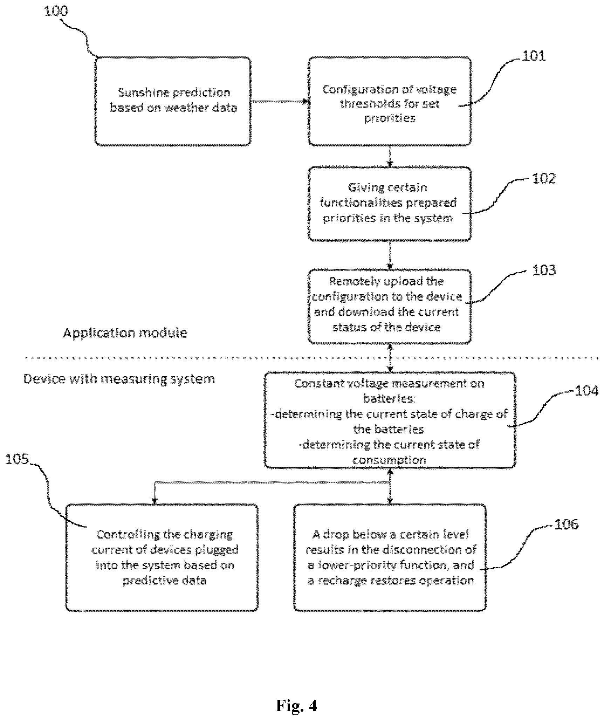

In Fig. 4 illustrates a block diagram showing the stages of how the operation of the power system is managed. In stage 100, prediction of insolation based on weather data takes place. As previously mentioned, weather data is provided from weather station 8, but also takes into account the time of day, i.e., the duration of day and night, and the change in the duration of day and night depending on the season and latitude, which can advantageously be tabulated and stored, for example, in the memory means of application module 1. In addition, the weather data used for sunshine prediction can also be modified manually, based on long-term weather forecasts for the region in which the device 2 is located. Next, in step 101, specific energy thresholds are configured for the battery bank 4 and priorities are set for the operation of the electric loads of the device 2. The priorities of operation may include criteria such as whether a particular load in the device 2 is important from the user's point of view (for example, it displays public transportation schedules on the display 72a, provides other important passenger information, and the like), or has an auxiliary role in the device (for example, it is an inductive charger 71a, USB charger 71b, or provides lighting in the bus shelter, or displays advertising information, or provides audio data to inform about arrivals and departures from the bus stop, provides music or other information), as well as whether it is used to communicate with a master system (master), or provides connectivity with application module 1. In stage 102, predetermined priorities are given to the loads present in the device and/or to the functionality provided by these loads 2. In stage 103, the configuration of loads and/or functionality determined in the above manner is sent to application module 1. In turn, in stage 104, a constant measurement of the battery voltage 4 is realized and the current level of charge is determined. In addition, the average current energy consumption of the device 2 is calculated. With this, the charging current of the battery bank 4 supplied with electricity from the photovoltaic panels 5 is controlled predictively in stage 105. The charging current is determined so that the sensitive loads of the device 2 can be powered and/or the critical functionality provided by these loads can be sustained for as long as possible. If the determined charging current of the battery bank 4 is not able to ensure that the battery bank will have energy above the specified energy threshold, stage 106 disconnects the loads with the lowest assigned priorities and/or shuts down the least critical functionality provided by these loads. In turn, charging the battery bank, to such a level that the energy will increase above the set energy threshold, restores the operation of the disconnected loads and disabled functionalities.

The power system management system analyzes measurements of the input voltage at the loads 6, 7 and the voltage at the batteries and determines the reserve of energy stored in the batteries 4. In addition, the loads send telemetry data about the currents and voltages at their outputs during charging and during discharging of the batteries 4. This telemetry data is also used for diagnostic purposes, which makes it possible to find out whether the individual loads of appliance 2 are working properly and whether they have been damaged or vandalized, as well as for marketing purposes, where, via an online portal, it is possible to find out the operating status of the entire appliance 2 and the amount of electricity produced by it. The operating status of device 2 includes, for example, information on which buttons on the device were used by passengers recently, how often the buttons were used, how many times the 71b USB chargers were used, how long the chargers were used, and similar information. Using the GSM/GPRS 700 antenna, data on the location of the device based on GPS data is also transmitted to the remote server, as well as the quality of the GSM signal and the ambient temperature, as read from the temperature sensor 77. In addition, information on the uploaded software and configuration version of each of the system's modules is transmitted. Peripheral modules 6 are, for example, inductive chargers 71a and USB chargers 71b, where, in addition, possible short-circuit states caused by connected user devices are detected. The chargers have their two voltage thresholds set. Above the upper voltage threshold, a zone of operation is designated in which continuous power is provided. Below the lower voltage threshold, the power supply of the 71a, 71b chargers is disabled. Between the upper threshold and the lower voltage threshold there is a zone of operation where power is available on demand. The outputs of inductive chargers 71a and USB chargers 71b are active, when a special button is pressed, for a specific time set remotely. Thus, below the lower voltage threshold of the 71a, 71b loads, the charging functions made available to users stop working. Likewise, communications systems have separate two voltage thresholds. For example, one (lower) voltage threshold disables GSM communications provided by distribution module 3, the zone between the first (lower) and second (upper) voltage thresholds allows communication with application module 1. The area of operation above the second (upper) voltage threshold allows the software update of distribution module 3. Other modules also have built-in power management functions that operate in an analogous manner. For example, peripheral module 6 responsible for providing multimedia functions, which includes control of Eink 72a displays, LED 72b lighting and LED 72c color animations, has specific voltage thresholds for the functionality provided. The Eink 72a display has only one threshold due to the fact that the function of displaying user information has the highest priority and is only turned off to protect the product from damage or destruction. One of the peripheral modules 6 in the form of multimedia module 72 controls the functionality extensions of Eink 72a displays, to which images can be transferred. Two modes of operation are provided for - advertising display and public transport arrival and departure schedule mode. In the advertising display mode, the content and images displayed by the 72a display are changed periodically. The frequency of ad changes here is fully configurable. In schedule mode, content is changed at the press of a button. On the other hand, the illumination provided by white LED 72b has three voltage thresholds. Power is supplied continuously when the voltage on this load is above the highest voltage threshold and this functionality is fully available. Operation in Smart mode takes place when this functionality activates when motion is detected by motion sensor 79 and reduces the illumination intensity, depending on the darkness read by twilight sensor 78. Operation in on-demand mode takes place when this functionality activates when the corresponding button is pressed, for example, when the voltage on this load falls below the next voltage threshold. The animation of the color LEDs 72c at the first highest threshold operates when power is provided continuously, that is, above the highest voltage threshold this functionality is still available. The second voltage threshold set below the first voltage threshold causes power to be provided on demand. Below the second voltage threshold, this functionality is activated at the press of a button. Here, special buttons can be used to select the type of animation, for example, in the form of a light snake, operating in flashing mode, with smooth brightening/darkening, change the color scheme, animation speed, frequency of occurrence and number of repetitions. Other examples of peripheral modules 6 are, for example, a smog sensor, where the current value of smog is determined, an illumination sensor that determines the intensity of illumination, a presence sensor that determines whether someone is near the device, a noise sensor that measures the number of decibels near the product, a QR reader for user authentication. Voltage thresholds for individual energy loads within the device 2 as well as current thresholds can be configured remotely. For all functionalities this is done independently. The voltage supplied to power the modules is supplied directly from the battery bank 4. Whether voltage is supplied to specific energy loads depends on the state of charge of the battery bank 4. Each module must independently adjust the voltage supplied to suit its own needs. The distribution module merely turns the power supply to the modules on or off to limit deep discharge. Each module can be configured independently so that some functions can run longer than others. Charging of the battery bank 4 is implemented using pulse width modulation, that is, the well-known PWM method. The maximum charging current is remotely configurable depending on the batteries used and the current energy demands of the device's loads 2.

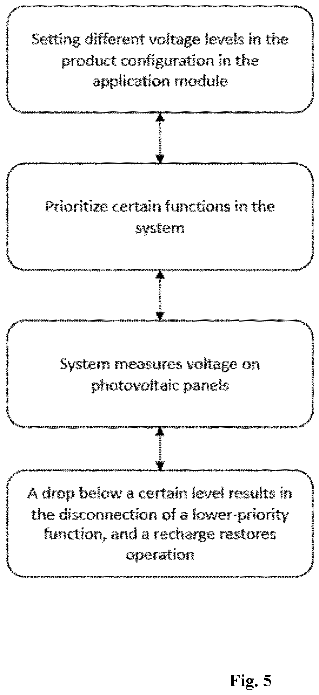

In Fig. 5 illustrates schematically an example of the implementation of how to manage the operation of the power system according to the invention in a smart shelter. According to the invention, the communication system imposes a high priority on communication functions and a display with dynamic passenger information. A lower priority is set, for example, on USB device charging functions and the lowest priority on lighting. The system analyzes the voltage measurements on the panels and the energy reserve in the batteries, and when these values fall below those set by the system, it begins to disconnect some lower-priority functions in order to save energy and sustain other functions.

### Application of the invention

The invention finds application, among other things, in urban and suburban transportation stops, smart shelters, information kiosks, and other devices related to public transportation infrastructure, pertaining to rail, streetcar, bus and trolleybus services, as well as in subways. In addition, the method and system according to the invention can be implemented in small electromobility devices, especially in electric vehicle charging stations, and in information points placed along bicycle routes, hiking trails and other recreational areas, such as solar benches, and garden furniture. In addition, the invention can be part of advertising and promotional devices and is not, of course, limited to them.

## Claims

1. A method for wirelessly managing the operation of a power supply system for electric loads supplied from buffers of electricity from renewable energy sources that generate electricity under changing weather and environmental conditions, wherein the power supply system stores electricity in electricity buffers, monitors the level of electricity stored in said buffers, and the process of discharging said buffers by the loads is regulated, and the process of recharging the electric load buffers from renewable energy sources is regulated, taking into account the weather and environmental conditions that are expected in the future, **characterized in that** the individual loads (6, 7) are prioritized and the functionalities provided by each load are prioritized, at least one load voltage threshold is determined for each load (6, 7), where exceeding the load voltage threshold changes the functionalities provided by said load, at least one buffer energy threshold is determined determining the amount of electricity stored in the electricity buffers (4), the average current energy consumption over time is calculated for all loads (6, 7) and, based on the calculated average energy consumption over time and on the forecasted weather and/or environmental conditions, the discharge function of the energy buffers over time is determined, as well as the probability of energy loss in the buffers below the established buffer energy threshold, and the charging current of the electricity buffers (4) and the operation of the power system are controlled predictively, which, based on the established voltage thresholds of all loads (6, 7) and the established energy threshold of the buffer (4) of electricity, according to the priorities assigned to the loads, turns on, changes to the on-demand mode of operation or turns off the loads and/or the functionality provided by these loads, and continuously adjusts this operation based on measurement data so as to maximize the operation time of the loads (6, 7) with the highest assigned priorities and or the functionality of these loads with the highest hierarchy.

2. The method according to claim 1, **characterized in that** for each load (6, 7) two voltage thresholds are established, an upper and a lower one, wherein in the zone of operation above the upper voltage threshold the load operates with all functionalities in continuous mode, in the zone of operation below the lower voltage threshold the load is turned off, and in the zone between the lower and the upper voltage threshold the operation of the load is provided on demand and/or some functionalities are turned off or limited.

3. The method according to claim 2, **characterized by** the fact that the on-demand operation of the load occurs when the user presses a button that activates the switch on the load.

4. The method according to claim 2 or 3, **characterized in that**, for loads in the form of, inter alia, inductive chargers (71a), or USB chargers (71b), on-demand operation means limiting the output current of said chargers, wherein the limited value of said output current results from the current energy capabilities of the buffer (4) and/or operation in a zone above or below a predetermined voltage threshold of the buffer.

5. The method according to claim 1, **characterized by** the fact that the prioritization of loads and the prioritization of functionality within each load is determined based on, among other things, an analysis of the frequency of functionality used by users of individual loads (6, 7), the type of device (2), weather and environmental conditions occurring at the location of the device (2).

6. The method according to claim 1, **characterized in that** the priorities given to the loads and/or the prioritization of the functionality provided by the loads are determined prior to the start of operation of the electric loads during the configuration of their operation and can be remotely modified during the operation of the device (2).

7. The method according to claim. 1, **characterized by** the fact that the discharge function of the electricity buffer (4) over time is calculated in such a way that first the charge level of the electricity buffer is determined in watt-hours, then the average current power consumption, which power is consumed by the entire device, is determined in watts, while the ratio of the level of charge of the electricity buffer to the average current power consumption determines the operating time of the device in hours, after which the unmetered weather coefficient is introduced, and by this weather coefficient the nominal power of the renewable energy source is multiplied, taking into account the fact that the day has a different length depending on the season of the year and also depending on the latitude, on which the device operates, by which a coefficient, specified in hours, is introduced, specifying the number of hours of sunshine on a particular day, and the product of the nominal power of the renewable energy source and the weather coefficient is multiplied by the coefficient specifying the number of hours of sunshine for a particular day, obtaining in watt-hours the amount of energy produced during a particular day, then the thus determined amount of energy produced in watt-hours for one day is multiplied by the number of days, the level of charge of the energy buffer in watt-hours is added, and the sum obtained is divided by the average current power consumption in watts.

8. The method according to claim 1, **characterized in that** the unmetered weather coefficient depends on the level of cloudiness or wind strength or sea agitation and/or forecast weather conditions.

9. The method according to claim 1, **characterized by** the fact that in the case of obtaining electricity from photovoltaic panels, the weather factor advantageously takes the values: 0 for no sun, 0 - 0.2 for high cloud cover, 0.2 - 0.4 for medium cloud cover, 0.4 - 0.6 for low cloud cover and 0.6 - 1.0 for sunny weather.

10. A system for wireless management of the operation of a power supply system for electric loads, supplied from buffers of electricity from renewable energy sources, which generate electricity under changing weather and environmental conditions, which power supply system provides for the storage of electricity in electricity buffers, monitoring of the level of electricity stored in said buffers, as well as regulation of the process of discharging said buffers by the loads, and regulation of the process of charging the buffers of electricity from renewable energy sources, taking into account weather and environmental conditions that are expected in the future, **characterized by** the fact that individual loads (6, 7) are prioritized, for each load (6, 7) at least one voltage threshold of the load is determined, with the functionality provided by said load changing if the voltage threshold is exceeded, there is at least one energy threshold of the buffer determining the amount of electricity stored in the buffers (4) of electricity, for all loads (6, 7), the average current energy consumption over time is calculated, and based on the calculated average energy consumption and on the forecasted weather and/or environmental conditions, the discharge function of the electricity buffer is determined, and the probability of energy loss in the buffers below the established buffer energy threshold is calculated, the said system provides predictive control of the charging current of the electricity buffers (4) and predictive operation of the power system, whereby, based on the established voltage thresholds of all loads (6, 7) and the established energy threshold of the buffer (4) of electricity, according to the priorities assigned to the loads, the system turns on, changes to the "on-demand" mode of operation or turns off the loads and/or functionality provided by these loads, and adjusts this action on an ongoing basis based on measurement data so as to maximize the operation time of the loads (6, 7) with the highest assigned priorities.

11. The system according to claim 10, **characterized in that** the electric load buffers are batteries and/or supercapacitors, and the determination of at least one said threshold, which determines the amount of electric energy stored in the buffers, is based on the determination of the discharge function of the battery and/or supercapacitor, below which threshold the operation of certain electric loads is turned off according to the previously assigned priorities and/or the particular functionality provided by these loads is turned off according to the established hierarchy of importance.

12. The system according to claim 10, **characterized in that** the loads (6, 7) are a multimedia module (72), an audio module (73), a backlit keyboard (74), an LED lighting module (72a, 72b), a wireless network router (75) - advantageously WiFi and/or ZigBee, an antenna (700) GSM and/or GPRS, a smog sensor (76), a temperature sensor (77), a dusk sensor (78), a motion sensor (79).

13. The system according to claim 10, **characterized in that** each load (6, 7) has at least two voltage thresholds, upper and lower, whereby in the zone of operation above the upper voltage threshold the system ensures operation of the load with all functionalities in continuous mode, in the zone of operation below the lower voltage threshold the system shuts down the load, and in the zone between the lower and upper voltage thresholds the system ensures operation of the load on demand and/or shuts down or limits functionalities according to a predetermined hierarchy of importance.

14. The system according to claim 13, **characterized by** the fact that it provides on-demand operation of the load after the user presses a button that activates the switch on the load.

15. The system according to claim 13 or 14, **characterized in that**, for loads in the form of, inter alia, USB chargers, or inductive chargers operating in on-demand mode, the system limits the output current of said chargers, wherein the limited value of said output current results from the current energy capabilities of the buffer (4) and/or operation in a zone above or below a predetermined energy threshold of the buffer.

16. The system according to claim 10, **characterized in that** it remotely prioritizes the loads and/or prioritizes the functionality provided by the loads prior to the start of operation of the electric loads when configuring their operation and can remotely modify them during the operation of the device (2).

17. The system according to claim. 10, **characterized in that** the renewable energy source is, in particular, solar radiation, wind pressure, water flow and/or tide, wherein the weather and/or environmental data are, respectively, cloud cover, precipitation, insolation in the case of solar radiation, wind power measurement data and barometric data in the case of wind pressure, water quantity, water level and water level in the case of water flow and/or tide.
